# EUROPÄISCHE PATENTANMELDUNG

(11) **EP 3 660 467 A1**
(43) Veröffentlichungstag der Anmeldung: **03.06.2020**
(21) Anmeldenummer: 19207996.0
(22) Anmeldetag: 08.11.2019
(51) Int. Cl.: G01D 13/26, G09G 5/10

(54) **ANZEIGEVORRICHTUNG**

(30) Priorität: 30.11.2018 DE 102018220700
(71) Anmelder: Robert Bosch GmbH, 70442 Stuttgart (DE)
(72) Erfinder: Ziegler, Elmar, 71272 Renningen (DE); Uebele, Patrick, 70193 Stuttgart (DE)

(57) **Zusammenfassung**

Vorgeschlagen wird eine Anzeigevorrichtung (22), insbesondere für ein Fahrzeug (20), wobei die Anzeigevorrichtung (22) wenigstens einen drehbar ausgebildeten Zeiger (30) aufweist und wobei die Anzeigevorrichtung (22) eine Beleuchtungsvorrichtung (34) aufweist. Der Zeiger (30) ist mittels Lichtstrahlen ausgesendet von der Beleuchtungsvorrichtung (34) beleuchtbar, wobei die Helligkeit der Lichtstrahlen ausgesendet von der Beleuchtungsvorrichtung (34) in Abhängigkeit von einer Drehposition des Zeigers (30) derart regelbar ist, dass der Zeiger (30) unabhängig von der Drehposition des Zeigers (30) mit einer vorgegebenen Helligkeit ausleuchtbar ist.

## Beschreibung

### Stand der Technik

Die Erfindung betrifft eine Anzeigevorrichtung, insbesondere für ein Fahrzeug sowie ein Verfahren zum Ansteuern einer Anzeigevorrichtung.

Aus der DE 10 2009 015 382 A1 ist eine Beleuchtungsvorrichtung für einen Zeiger eines Zeigerinstruments bekannt.

### Offenbarung der Erfindung

Vorgeschlagen wird eine Anzeigevorrichtung, insbesondere für ein Fahrzeug, wobei die Anzeigevorrichtung wenigstens einen drehbar ausgebildeten Zeiger aufweist. Weiterhin weist die Anzeigevorrichtung eine Beleuchtungsvorrichtung auf, wobei der Zeiger mittels Lichtstrahlen ausgesendet von der Beleuchtungsvorrichtung beleuchtbar ist. Die Helligkeit der Lichtstrahlen ausgesendet von der Beleuchtungsvorrichtung ist in Abhängigkeit von einer Drehposition des Zeigers derart regelbar, dass der Zeiger unabhängig von der Drehposition des Zeigers mit einer vorgegebenen Helligkeit ausleuchtbar ist.

Eine Anzeigevorrichtung kann beispielsweise in einem Instrument Cluster und/oder in einem Armaturenbrett, insbesondere eines Fahrzeugs angeordnet werden. Mittels einer Anzeigevorrichtung können einem Fahrer und/oder einem Beifahrer Informationen angezeigt werden. Beispielsweise können Informationen über den Fahrzeugzustand, wie beispielsweise die Geschwindigkeit, die Drehzahl, die Tankfüllung des Fahrzeugs, die Temperatur oder weitere Informationen mittels der Anzeigevorrichtung angezeigt werden. Eine Beleuchtungsvorrichtung kann beispielsweise zu einer Beleuchtung der Anzeigevorrichtung ausgebildet sein und auch als Beleuchtungseinrichtung bezeichnet werden.

Der Vorteil der vorliegenden Erfindung liegt darin, dass für einen Betrachter der Anzeigevorrichtung der Zeiger mit einer vorgegebenen und insbesondere mit einer zumindest annähernd konstanten Helligkeit dargestellt wird, unabhängig von der Position des Zeigers. Hierdurch kann ein Betrachter die Anzeigevorrichtung insbesondere sicher wahrnehmen, wobei hierdurch die mittels der Anzeigevorrichtung angezeigten Informationen zuverlässig durch einen Betrachter wahrnehmbar sind. Ein Betrachter wird insbesondere nicht durch unterschiedliche Helligkeiten eines Zeigers abgelenkt. Hierdurch kann insbesondere die Fahrsicherheit erhöht werden. Ferner wird die Anmutung des Instrument Clusters erhöht, da die Beleuchtung des Zeigers insbesondere nicht flackert bzw. blinkt.

Ferner kann mittels der vorgegebenen Anzeigevorrichtung insbesondere Bauraum eingespart werden. Weiterhin kann Aufwand, insbesondere Zeit und/oder Kosten bei der Herstellung, zum Beispiel Entwicklungszeit und der Entwicklungskosten, reduziert werden. Insbesondere können mechanische Änderungen, insbesondere zusätzliche Änderungen, wie beispielsweise zusätzliche Bedruckung, Folien, Rauheit oder geometrische Änderungen oder Konzeptänderungen bei der Herstellung der Anzeigevorrichtung reduziert bzw. verhindert werden. Weiterhin können insbesondere Simulationen zu teilweise vereinfacht bzw. reduziert werden. Hierdurch kann sich insbesondere der Aufwand bei der Entwicklung der Anzeigevorrichtung, insbesondere beim Erstellen des Beleuchtungskonzepts der Anzeigevorrichtung bzw. des Zeigers reduziert werden. Ferner sind insbesondere weniger Muster zur Vermessung der Beleuchtung notwendig, wodurch insbesondere weniger Kosten bei einer Konzeptänderung anfallen.

In einer Weiterentwicklung weist der Zeiger einen Lichtleiter auf. Hierdurch kann insbesondere nicht bzw. können insbesondere Lichtstrahlen der Beleuchtungsvorrichtung derart weitergeleitet werden, dass diese von einem Betrachter wahrnehmbar sind. Hierdurch kann insbesondere der Zeiger auch bei Dunkelheit sichtbar ausgebildet sein. Hierdurch wird insbesondere die Fahrsicherheit erhöht, da ein Fahrer den Zeiger auch bei schlechten Lichtverhältnissen in einer Umgebung der Anzeigevorrichtung wahrnehmen kann und somit die angezeigten Informationen mittels der Anzeigevorrichtung wahrnehmen kann. Weiterhin können Lichtstrahlen auf einfache und/oder sichere Weise weitergeleitet werden. Hierdurch kann insbesondere Bauraum eingespart werden.

In einer vorteilhaften Ausführung kann der Zeiger auf einer Welle angeordnet sein, wobei die Welle senkrecht zu einem Träger angeordnet ist und wobei die Beleuchtungsvorrichtung an dem Träger angeordnet ist. Dies ermöglicht insbesondere eine einfache und/oder sichere bzw. zuverlässige Anordnung der Elemente in einer Anzeigevorrichtung. Ferner kann mittels der vorgegebenen Anordnung insbesondere Bauraum eingespart werden. Zur Anzeige von Informationen mittels des Zeigers kann der Zeiger insbesondere auf der Welle rotieren bzw. mit anderen Worten sich um die Welle drehen.

Vorteilhafterweise kann der Träger ein Element mit einer Skalierung aufweisen, wobei der Zeiger in Abhängigkeit der Drehposition des Zeigers mittels der Skalierung einen bestimmten Wert anzeigt. Mit anderen Worten zeigt der Zeiger, insbesondere mit einer Zeigerspitze, auf einen bestimmten Wert der Skalierung. Hierdurch können, zum Beispiel auf analoge Weise, einem Betrachter der Anzeigevorrichtung Informationen einfach und/oder zuverlässig mittels des Zeigers und der Skalierung angezeigt werden. Hierdurch kann ein Betrachter beispielsweise über einen Fahrzeugzustand informiert werden, wodurch dieser das Fahrzeug vorzugsweise sicher führen kann.

Weiterhin kann der Zeiger eine ringförmige Lichteinkoppelfläche aufweisen, wobei die Lichteinkoppelfläche derart angeordnet ist, dass die Lichtstrahlen ausgesendet von der Beleuchtungsvorrichtung in der Lichteinkoppelfläche einkoppelbar sind. Hierdurch können insbesondere auf einfache und/oder zuverlässige Weise Lichtstrahlen in den Zeiger eingekoppelt werden. Hierdurch kann ein Zeiger beleuchtet werden, wodurch für einen Betrachter, selbst bei schlechten Lichtverhältnissen, insbesondere mittels der Anzeigevorrichtung Informationen dargestellt werden können. Hierdurch kann insbesondere die Fahrzeugsicherheit erhöht werden. Ferner kann mittels der ringförmigen Lichteinkoppelfläche Bauraum eingespart werden.

In einer beispielhaften Ausgestaltung können die Helligkeit Lichtstrahlen ausgesendet von der Beleuchtungsvorrichtung mittels einer Kennlinie, insbesondere einer Dimmkennlinie, regelbar sein. Hierdurch kann insbesondere eine Regelung der Helligkeit mittels einer Software technischen Lösung realisiert werden, wodurch insbesondere Bauraum in der Anzeigevorrichtung eingespart werden kann. Ferner können insbesondere Aufwand und/oder Kosten und/oder zusätzliche Komponenten zu einer Regelung der Helligkeit bei der Herstellung der Anzeigevorrichtung reduziert bzw. verringert werden. Ferner kann mittels der vorgeschlagenen Regelung die Helligkeit einfach und/oder zuverlässig an bestimmte Bedingungen angepasst werden. Hierdurch kann insbesondere ein ungewolltes Blinken bzw. Flackern des Zeigers reduziert bzw. verhindert werden. In einer Weiterentwicklung kann beispielsweise zusätzlich die durchschnittliche Helligkeit der Lichtstrahlen, insbesondere zur Beleuchtung des Zeigers, erhöht werden.

In vorteilhaften Weiterentwicklung kann die Anzeigevorrichtung weiterhin einen Sensor zum Bestimmen einer Drehposition des Zeigers Steuereinheit aufweisen. Hierdurch kann eine Position eines Zeigers ermittelt werden, wodurch insbesondere eine Regelung der Helligkeit mittels einer Software Lösung realisiert werden kann in Abhängigkeit der Position des Zeigers, wodurch insbesondere Bauraum in der Anzeigevorrichtung eingespart werden kann. Ferner können insbesondere Aufwand und/oder Kosten bei der Herstellung sowie zusätzliche Komponenten zu einer Regelung der Helligkeit, eingespart werden. Ferner kann mittels der vorgeschlagenen Regelung die Helligkeit einfach und/oder zuverlässig an bestimmte Bedingungen angepasst werden.

Vorzugsweise kann die Beleuchtungsvorrichtung zumindest eine Lichtquelle aufweisen. In einer Weiterentwicklung kann die zumindest eine Lichtquelle als eine Leuchtdiode oder als eine LED oder als eine OLED ausgebildet sein. Mittels der vorgeschlagenen Lichtquelle ist die Beleuchtungsvorrichtung und somit der Zeiger insbesondere einfach und/oder sicher bzw. zuverlässig ausleuchtbar. Hierdurch kann insbesondere Bauraum und/oder Aufwand, zum Beispiel Kosten und/oder Material, eingespart werden. Beispielsweise kann die Anzeigevorrichtung mittels einer vorteilhaften Weiterentwicklung weniger Lichtquellen in Bezug auf eine Anzeigevorrichtung aufweisen, die nicht entsprechend der vorliegenden Anzeigevorrichtung ausgeführt ist, wodurch insbesondere Kosten, zum Beispiel für Komponenten, insbesondere Lichtquellen, und Folgekosten wie Bestückung und/oder die Kontrolle reduziert werden können.

In einer vorteilhaften Ausführung ist der Zeiger mittels Lichtstrahlen ausgesendet von der Beleuchtungsvorrichtung beleuchtet, wobei die Helligkeit der Lichtstrahlen ausgesendet von der Beleuchtungsvorrichtung in Abhängigkeit von einer Drehposition des Zeigers derart geregelt wird, dass der Zeiger unabhängig von der Drehposition des Zeigers mit einer vorgegebenen Helligkeit ausgeleuchtet ist. Hierdurch kann der Zeiger insbesondere sicher und/oder zuverlässig beleuchtet werden, wodurch insbesondere mittels der Anzeigevorrichtung für einen Betrachter Informationen, zum Beispiel mittels des Zeigers, sicher und/oder zuverlässig wahrnehmbar angezeigt werden.

Ferner wird ein Instrument Cluster mit einer Anzeigevorrichtung vorgeschlagen. Weiterhin wird ein Fahrzeug mit einen Instrument Cluster vorgeschlagen.

Vorgeschlagen wird ein Verfahren zum Ansteuern einer Anzeigevorrichtung, wobei der Zeiger mittels Lichtstrahlen ausgesendet von der Beleuchtungsvorrichtung beleuchtet wird. Weiterhin wird die Helligkeit der Lichtstrahlen ausgesendet von der Beleuchtungsvorrichtung in Abhängigkeit von einer Drehposition des Zeigers derart geregelt, dass der Zeiger unabhängig von der Drehposition des Zeigers mit einer vorgegebenen Helligkeit ausgeleuchtet wird.

Der Vorteil des vorgeschlagenen Verfahrens liegt darin, dass für einen Betrachter der Anzeigevorrichtung der Zeiger mit einer vorgegebenen und insbesondere mit einer zumindest annähernd konstanten Helligkeit ausgeleuchtet wird, insbesondere unabhängig von der Position des Zeigers. Hierdurch kann ein Betrachter die Anzeigevorrichtung insbesondere sicher wahrnehmen, wobei hierdurch die mittels der Anzeigevorrichtung angezeigten Informationen zuverlässig durch einen Betrachter wahrnehmbar sind. Weiterhin kann Aufwand, insbesondere Zeit und/oder Kosten bei der Herstellung eingespart werden. Insbesondere können mechanische Änderungen, insbesondere zusätzliche Änderungen, wie beispielsweise zusätzliche Bedruckung, Folien, Rauheit oder geometrische Änderungen oder Konzeptänderungen bei der Herstellung der Anzeigevorrichtung reduziert bzw. verhindert werden. Hierdurch kann sich insbesondere der Aufwand bei der Entwicklung der Anzeigevorrichtung, insbesondere bei der Entwicklung des Beleuchtungskonzepts der Anzeigevorrichtung bzw. des Zeigers reduziert werden.

Weiterhin wird ein Computerprogramm vorgeschlagen, das dazu eingerichtet ist, das genannte Verfahren auszuführen. Ferner wird ein Computerlesbares Speichermedium vorgeschlagen, dass das Computerprogramm umfasst.

### Kurze Beschreibung der Zeichnungen

Ausführungsbeispiele der Erfindung sind in den Zeichnungen dargestellt und in den nachfolgenden Beschreibungen näher erläutert. Für die in den verschiedenen Figuren dargestellten und ähnlich wirkenden Elemente werden gleiche Bezugszeichen verwendet, wobei auf eine wiederholte Beschreibung der Elemente verzichtet wird. Es zeigen:
Fig. 1 eine schematische Darstellung einer Draufsicht eines Fahrzeugs gemäß eines Ausführungsbeispiels der vorliegenden Erfindung;
Fig. 2 eine schematische Darstellung eines Ausschnitts eines Fahrzeugs gemäß eines Ausführungsbeispiels der vorliegenden Erfindung;
Fig. 3 in einer Schnittansicht eine schematische Darstellung eines Ausschnitts einer Anzeigevorrichtung gemäß eines Ausführungsbeispiels der vorliegenden Erfindung;
Fig. 4 eine schematische Darstellung eines Ausschnitts einer Anzeigevorrichtung gemäß eines Ausführungsbeispiels der vorliegenden Erfindung;
Fig. 5 eine schematische Darstellung eines Ausschnitts einer Anzeigevorrichtung gemäß eines Ausführungsbeispiels der vorliegenden Erfindung;
Fig. 6 ein Diagramm einer Helligkeit;
Fig. 7 ein Diagramm einer Helligkeit gemäß eines Ausführungsbeispiels der vorliegenden Erfindung;
Fig. 8 ein Verfahren zum Ansteuern einer Anzeigevorrichtung gemäß eines Ausführungsbeispiels der vorliegenden Erfindung;
Fig. 9 ein Verfahren zur Herstellung einer Anzeigevorrichtung gemäß eines Ausführungsbeispiels der vorliegenden Erfindung.

### Ausführungsformen der Erfindung:

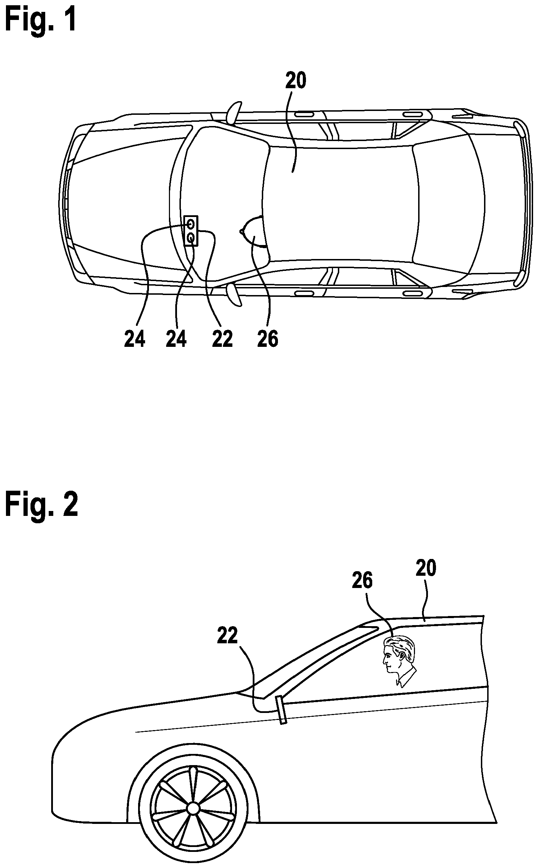

Fig. 1 zeigt eine schematische Darstellung einer Draufsicht eines Fahrzeugs 20, beispielsweise eines Kraftfahrzeugs, beispielsweise eines Autos, mit einer Anzeigevorrichtung 22. Die Anzeigevorrichtung 22 kann als analoges Instrument Cluster ausgeführt sein, wobei die Anzeigevorrichtung 22 beispielsweise ein oder mehrere Ziffernblätter 24 aufweisen kann. Alternativ kann ein Instrument Cluster eines Fahrzeugs insbesondere die Anzeigevorrichtung 22 aufweisen. Das Instrument Cluster kann insbesondere in einem Fahrzeug 20 angeordnet sein. Die Ziffernblätter 24 können beispielsweise eine Skala sowie einen Mittelpunkt aufweisen, wobei ein drehbarer Zeiger, welcher beispielsweise am Mittelpunkt eines Ziffernblatt 24 drehbar angeordnet und/oder gelagert sein kann, beispielsweise auf einen Wert der Skala des Ziffernblatt 24 zeigen kann. Hierdurch können beispielsweise die Geschwindigkeit und/oder die Drehzahl und/oder die Temperatur und/oder die Tankfüllung und/oder weitere Informationen, welche für den Betrieb eines Fahrzeugs verwendet werden können, angezeigt werden.

Die Anzeigevorrichtung 22 ist derart in dem Fahrzeug 20 angeordnet, dass ein Betrachter 26 die mittels der Anzeigevorrichtung 22 dargestellten Informationen betrachten kann. Ein Betrachter 26 kann insbesondere ein Fahrer 26 und/oder ein Beifahrer des Fahrzeugs 20 sein. Die ausgegebenen Informationen können beispielsweise Informationen über den Fahrzeugzustand, wie die Geschwindigkeit, die Drehzahlanzeige und/oder die Tankfüllung sein. Alternativ oder zusätzlich kann die Anzeigevorrichtung 22 an einer anderen Stelle im Armaturenbrett des Fahrzeugs 20 angeordnet sein.

Fig. 2 zeigt eine schematische Darstellung eines Ausschnitts eines Fahrzeugs 20 von einer Seite mit einer Anzeigevorrichtung 22. Das Fahrzeug 20 gemäß Fig. 2 kann gemäß dem Fahrzeug 20 gemäß Fig. 1 ausgeführt sein. Die Anzeigevorrichtung 22 kann insbesondere entsprechend der Anzeigevorrichtung 22 gemäß Fig. 1 ausgeführt sein und gemäß Fig. 1 in dem Fahrzeug 20 angeordnet sein.

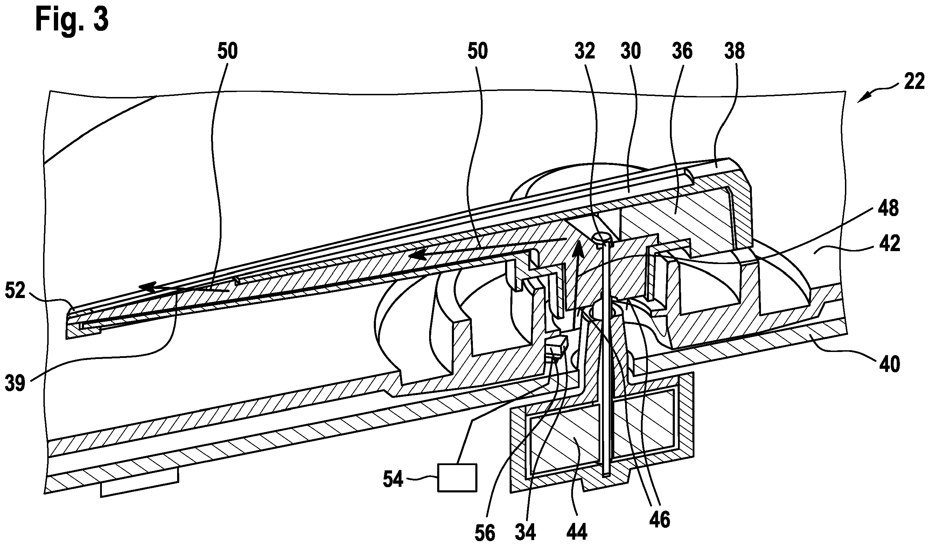

Fig. 3 zeigt in einer schematischen Darstellung einen Ausschnitt einer Anzeigevorrichtung 22 gemäß eines Ausführungsbeispiels der vorliegenden Erfindung. Die Anzeigevorrichtung 22 kann insbesondere entsprechend der Anzeigevorrichtung 22 gemäß Fig. 1 und/oder gemäß Fig. 2 ausgeführt sein und gemäß Fig. 1 und/oder gemäß Fig. 2 in dem Fahrzeug angeordnet sein.

Die Anzeigevorrichtung 22 weist wenigstens einen drehbar ausgebildeten Zeiger 30 auf. Der Zeiger 30 kann insbesondere drehbar gelagert sein. In dieser vorteilhaften Ausführung ist der Zeiger 30 auf einer Welle 32 angeordnet. Der Zeiger 30 ist insbesondere derart auf der Welle 32 angeordnet, dass sich der Zeiger 30 um die Welle 32 und/oder mit der Welle 32 drehen kann. Weiterhin weist die Anzeigevorrichtung 22 eine Beleuchtungsvorrichtung 34 auf, die Beleuchtungsvorrichtung 34 Lichtstrahlen aussenden kann. Der Zeiger 30 ist mittels Lichtstrahlen ausgesendet von der Beleuchtungsvorrichtung 34 beleuchtbar. Die Helligkeit der Lichtstrahlen ausgesendet von der Beleuchtungsvorrichtung 34 ist in Abhängigkeit von einer Drehposition des Zeigers 30 derart regelbar, dass der Zeiger 30 unabhängig von der Drehposition des Zeigers 30 mit einer vorgegebenen Helligkeit ausleuchtbar ist.

Weiterhin weist der Zeiger 30 insbesondere einen Lichtleiter 36 auf, wobei mittels des Lichtleiters 36 insbesondere Lichtstrahlen weitergeleitet werden können. Mit anderen Worten können die Lichtstrahlen mittels des Lichtleiters 36 bzw. über den Lichtleiter 36 geleitet werden, wobei die Lichtstrahlen mittels der Beleuchtungsvorrichtung 34 ausgesendet werden. In einer weiteren Ausführung kann der Zeiger 30 insbesondere als Lichtleiter 36 ausgeführt sein. In dieser Ausführung weist der Zeiger 30 weiterhin ein Abdeckelement 38 auf, wobei das Abdeckelement 38 derart auf dem Lichtleiter 36 angeordnet ist, dass lediglich ein Ausschnitt 39 des Lichtleiters von einem Betrachter sichtbar ist. Mit anderen Worten können die Lichtstrahlen, welche mittels des Lichtleiter 36 weitergeleitet werden, von einem Betrachter Zeigers 30 lediglich in dem Bereich 39 wahrgenommen werden, welcher nicht von dem Abdeckelement 38 bedeckt ist. Das Abdeckelement 38 kann eine variable Größe aufweisen.

Die Anzeigevorrichtung weist weiterhin einen Träger 40 auf. Die Welle 32 ist in dieser Ausgestaltung senkrecht zu dem Träger 40 angeordnet. Der Zeiger 30 ist insbesondere derart auf der Welle 32 angeordnet, dass der Zeiger 30 zumindest teilweise parallel zu dem Träger 40 angeordnet ist. Die Beleuchtungsvorrichtung 34 ist insbesondere an dem Träger 40 angeordnet. Die Beleuchtungsvorrichtung 34 ist insbesondere derart an dem Träger 40 angeordnet, dass die Beleuchtungsvorrichtung 34 Lichtstrahlen in Richtung des Zeigers 30 aussenden kann.

Der Träger 40 weist weiterhin ein Element 42 mit einer Skalierung auf, wobei der Zeiger 30 in Abhängigkeit der Drehposition des Zeigers 30 mittels der Skalierung einen bestimmten Wert anzeigen kann bzw. anzeigt. Das Element 42 mit der Skalierung kann insbesondere auf dem Träger 40 angeordnet sein. In einer Weiterentwicklung kann das Element 42 und der Träger 40 einstückig ausgeführt sein, wobei insbesondere die Skalierung auf dem Träger 40 angeordnet bzw. aufgemalt bzw. aufgedruckt ist.

Weiterhin ist an dem Träger 40 ein Antrieb 44, zum Beispiel ein Motor, angeordnet. Mittels des Antriebs 44 kann insbesondere die Welle 32 bewegt bzw. gedreht werden. Mit anderen Worten kann mittels des Antriebs 44 die Welle 32 in Bewegung gesetzt werden bzw. bewegt werden, wodurch der Zeiger 30, insbesondere um eine Achse durch die Welle 32, gedreht werden kann. Mit anderen Worten bildet die Welle 32 den Mittelpunkt, um welchen sich der Zeiger 30 dreht. Die Welle 32 kann somit auch als Achse des Zeigers 30 bezeichnet werden.

Der Zeiger 30 weist weiterhin eine Lichteinkoppelfläche 46 auf, wobei die Lichteinkoppelfläche 46 derart angeordnet ist, dass die Lichtstrahlen ausgesendet von der Beleuchtungsvorrichtung 34 in der Lichteinkoppelfläche 46 einkoppelbar sind. Die Lichteinkoppelfläche 46 kann unterschiedliche Formen aufweisen, die Lichteinkoppelfläche 46 beispielsweise ringförmig und/oder halbkreisförmig ausgebildet sein. Mit anderen Worten werden Lichtstrahlen, die von der Beleuchtungsvorrichtung 34 ausgesendet werden in Richtung der Lichteinkoppelfläche 46 geleitet bzw. gestrahlt, wobei die Lichtstrahlen anschließen in die Lichteinkoppelfläche 46 eingekoppelt werden. Hierfür kann die Lichteinkoppelfläche 46 insbesondere an dem Lichtleiter 36 des Zeigers 30 angeordnet sein. Mit anderen Worten zeigt die Lichteinkoppelfläche 46 in Richtung der Beleuchtungsvorrichtung 34. Die mittels der Beleuchtungsvorrichtung 34 ausgesendeten Lichtstrahlen können insbesondere mittels eines ersten Pfeils 48 dargestellt werden. Die Lichtstrahlen werden insbesondere entsprechend des ersten Pfeils 48 in die Lichteinkoppelfläche 46 ein gekoppelt und weiterhin über den Lichtleiter 36 des Zeigers 30 weitergeleitet. Anschließend werden die Lichtstrahlen beispielsweise in einem optischen Element in dem Lichtleiter 36 umgelenkt, wobei das optische Element in dem Lichtleiter 36 die Lichtstrahlen reflektiert bzw. spiegelt. Hierdurch werden die Lichtstrahlen entsprechend eines zweiten Pfeils 50 entlang des Lichtleiters 36 weitergeleitet. Insbesondere können die Lichtstrahlen zu einer Spitze 52 des Zeigers 30 weitergeleitet werden. Weiterhin können die Lichtstrahlen insbesondere in einem definierten Bereich aus dem Lichtleiter 36 und somit aus dem Zeiger 30 heraustreten, wodurch die Lichtstrahlen von einem Betrachter wahrgenommen werden können.

Die mittels der Beleuchtungsvorrichtung 34 ausgesendeten Lichtstrahlen bzw. die Helligkeit der mittels der Beleuchtungsvorrichtung 34 Lichtstrahlen 34 können insbesondere mittels einer Kennlinie geregelt werden. Hierfür kann die Anzeigevorrichtung 22 weiterhin eine Steuereinheit 54 aufweisen, wobei mittels der Steuereinheit 54 die Beleuchtungsvorrichtung 34 ansteuerbar ist. Mit anderen Worten ist die Steuereinheit 54 mit der Beleuchtungsvorrichtung 34, insbesondere über eine Schnittstelle, verbunden, wobei die Steuereinheit 54 Daten zum Steuern der Beleuchtungsrichtung 34 aussendet. Hierdurch kann insbesondere die Beleuchtungsvorrichtung 34 angesteuert werden, wobei mittels der Steuerung insbesondere die Aussendung von Lichtstrahlen sowie deren Helligkeit beeinflusst werden kann. Mit anderen Worten kann mittels der Steuereinheit 54 die Helligkeit der Lichtstrahlen geregelt bzw. gesteuert werden. Mit anderen Worten wird bzw. ist der Zeiger 30 mittels Lichtstrahlen ausgesendet von der Beleuchtungsvorrichtung 34 beleuchtet, wobei die Helligkeit der Lichtstrahlen ausgesendet von der Beleuchtungsvorrichtung 34 in Abhängigkeit von einer Drehposition des Zeigers 30 derart geregelt ist bzw. wird, dass der Zeiger 30 unabhängig von der Drehposition des Zeigers 30 mit einer vorgegebenen Helligkeit ausgeleuchtet ist. In vorteilhaften Weiterentwicklung kann die Anzeigevorrichtung weiterhin einen Sensor zum Bestimmen einer Drehposition des Zeigers Steuereinheit aufweisen. Hierdurch kann eine Position eines Zeigers ermittelt werden, wodurch insbesondere eine Regelung der Helligkeit mittels einer Software Lösung realisiert werden kann in Abhängigkeit der Position des Zeigers.

Auf der Steuereinheit 54 kann insbesondere ein Computerprogramm gespeichert werden, wobei das Computerprogramm dazu eingerichtet ist die Beleuchtungsvorrichtung 34 anzusteuern. Beispielsweise kann in der Steuereinheit 54 ein computerlesbares Speichermedium angeordnet sein, wobei in dem computerlesbaren Speichermedium das Computerprogramm gespeichert sein kann.

Die Beleuchtungsvorrichtung 34 weist zumindest eine Lichtquelle 56 auf. In dieser vorteilhaften Ausführung weist die Beleuchtungsvorrichtung 34 eine Lichtquelle 56 auf. Die zumindest eine Lichtquelle 56 kann beispielsweise als eine Leuchtdiode oder als eine LED oder als eine OLED ausgebildet sein.

Die Anzeigevorrichtung 22 kann insbesondere in einem analogen Kombiinstrument mit Zeigern in einem Kraftfahrzeug angeordnet sein. Bei solchen Kombiinstrumenten können Lichtquellen um die Zeigernabe auf einem Träger, zum Beispiel auf einer Leiterplatte, angeordnet. Das Licht bzw. die Lichtstrahlen der Lichtquelle können insbesondere mittels eines Reflektors reflektiert werden und insbesondere über die Lichteinkoppelfläche in die Zeigernabe und somit in den Zeiger 30 eingekoppelt werden. In dem Zeiger 30 können die Lichtstrahlen insbesondere über ein Prisma zu den zu beleuchteten Bereichen, zum Beispiel zu der Zeigerspitze 52, geleitet werden.

Der beleuchtete Bereich des Zeigers 30 kann hierdurch insbesondere eine bestimmte Helligkeit mit einer vorgegebenen Toleranz aufweisen. Diese Helligkeit kann vorzugsweise in jeder Stellung bzw. Position des Zeigers 30 eingehalten werden.

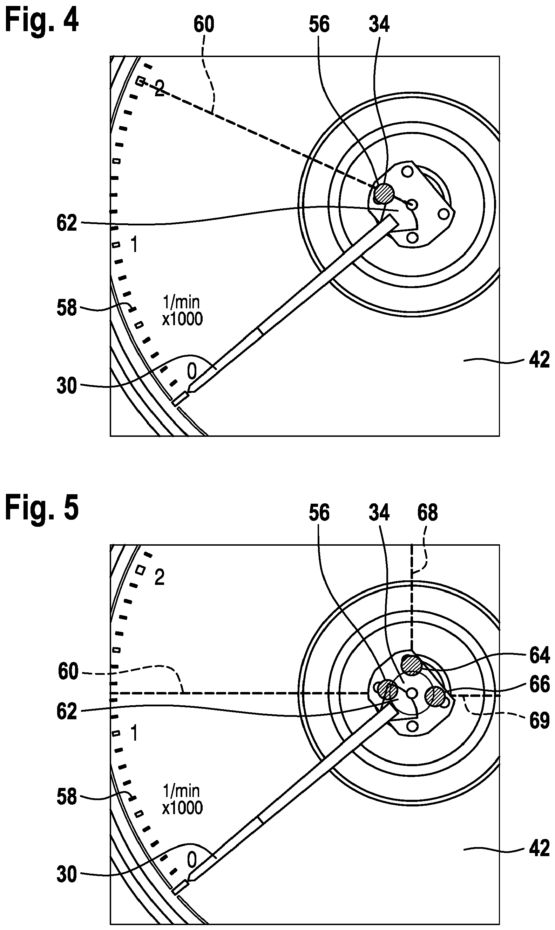

Fig. 4 zeigt eine schematische Darstellung eines Ausschnitts einer Anzeigevorrichtung 22 gemäß eines Ausführungsbeispiels der vorliegenden Erfindung. Die Anzeigevorrichtung 22 gemäß Fig. 4 kann insbesondere entsprechend der Anzeigevorrichtung 22 gemäß Fig. 1 und/oder gemäß Fig. 2 und/oder gemäß Fig. 3 ausgeführt sein und gemäß Fig. 1 und/oder gemäß Fig. 2 in dem Fahrzeug angeordnet sein. Im Unterschied zu der Anzeigevorrichtung 22 gemäß Fig. 1 und/oder gemäß Fig. 2 und/oder gemäß Fig. 3 wird die Anzeigevorrichtung 22 gemäß Fig. 4 von oben dargestellt. Weiterhin ist insbesondere eine Skalierung 58 auf dem Element 42 und/oder auf dem Träger dargestellt.

Ferner ist insbesondere mittels einer gestrichelten Linie 60 eine Position des Zeigers 30 dargestellt, bei welcher Position des drehbaren Zeigers 30, ohne eine Regulierung der Helligkeit, Lichtstrahlen mit einer zumindest annähernd maximalen Helligkeit von dem Zeiger ausgesendet werden. Dies ist der Fall, da die Beleuchtungsvorrichtung 34, insbesondere die Lichtquelle 56, insbesondere in dieser Position unter einem Zeigerelement 62 des Zeigers 30 angeordnet ist. Würde die Helligkeit der Beleuchtungsvorrichtung 34 nicht geregelt, würde der Zeiger, sobald er in dieser Position angeordnet ist, mit einer zumindest annähernd maximalen Helligkeit leuchten. Mittels einer Regulierung der Helligkeit kann der Zeiger 30 jedoch mit einer bestimmten bzw. mit einer definierten Helligkeit angesteuert werden, sodass beispielsweise keine gravierenden bzw. großen Helligkeitsunterschiede des Zeigers in unterschiedlichen Positionen ausgebildet werden.

Fig. 5 zeigt eine schematische Darstellung eines Ausschnitts einer Anzeigevorrichtung 22 gemäß eines Ausführungsbeispiels der vorliegenden Erfindung. Die Anzeigevorrichtung 22 gemäß Fig. 5 kann insbesondere entsprechend der Anzeigevorrichtung 22 gemäß Fig. 1 und/oder gemäß Fig. 2 und/oder gemäß Fig. 3 und/oder gemäß Fig. 4 ausgebildet sein und gemäß Fig. 1 und/oder gemäß Fig. 2 in dem Fahrzeug angeordnet sein. Im Unterschied zu der Anzeigevorrichtung 22 gemäß Fig. 1 und/oder gemäß Fig. 2 und/oder gemäß Fig. 3 wird die Anzeigevorrichtung gemäß Fig. 5 von oben dargestellt. Weiterhin ist insbesondere eine Skalierung 58 auf dem Element 42 dargestellt. Im Unterschied zu der Anzeigevorrichtung 22 gemäß Fig. 4 weist die Beleuchtungsvorrichtung 34 der Anzeigevorrichtung 22 gemäß Fig. 5 insbesondere drei Lichtquellen 56, 64, 66 auf.

Weiterhin ist insbesondere mittels einer zweiten gestrichelten Linie 68 eine Position des Zeigers 30 dargestellt, bei welcher Position des Zeigers 30, ohne Regulierung der Helligkeit, Lichtstrahlen von der zweiten Lichtquelle 64 der Beleuchtungsvorrichtung 34 mit einer zumindest annähernd maximalen Helligkeit von dem Zeiger ausgesendet werden. Dies ist der Fall, da die zweite Lichtquelle 64 der Beleuchtungsvorrichtung 34 insbesondere unter einem Zeigerelement 62 des Zeigers 30 angeordnet ist. Würde die Helligkeit der zweiten Lichtquelle 64 der Beleuchtungsvorrichtung 34 nicht geregelt, würde der Zeiger 30, sobald er in dieser Position angeordnet ist, mit einer zumindest annähernd maximalen Helligkeit leuchten. Mittels eine Regulierung der Helligkeit der zweiten Lichtquelle 64 der Beleuchtungsvorrichtung 34 kann der Zeiger 30 jedoch mit einer bestimmten bzw. mit einer definierten Helligkeit angesteuert werden. Gleiches kann entsprechend für die dritte Lichtquelle 66 der Beleuchtungsvorrichtung angewendet werden. Entsprechendes gilt für eine dritte gestrichelten Linie 69, bei welcher Position des Zeigers 30, ohne Regulierung der Helligkeit, Lichtstrahlen von der dritten Lichtquelle 66 der Beleuchtungsvorrichtung 34 mit einer zumindest annähernd maximalen Helligkeit von dem Zeiger ausgesendet werden.

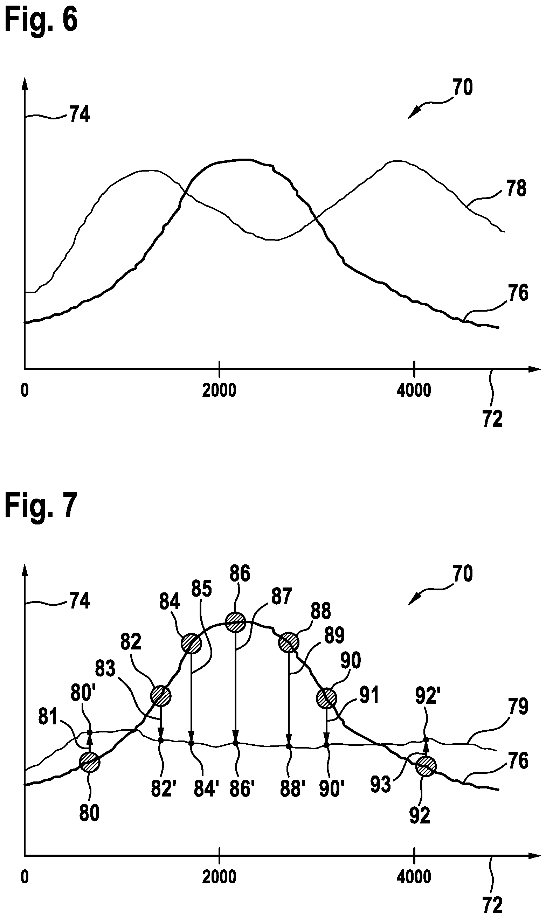

Fig. 6 zeigt ein Diagramm 70 einer Helligkeit eines Zeigers 30. Der Zeiger 30 kann insbesondere entsprechend des Zeigers 30 gemäß Fig. 1 und/oder gemäß Fig. 2 und/oder gemäß Fig. 3 und/oder gemäß Fig. 4 und/oder gemäß Fig. 5 ausgeführt sein und entsprechend in einer Anzeigevorrichtung 22 gemäß Fig. 1 und/oder gemäß Fig. 2 und/oder gemäß Fig. 3 und/oder gemäß Fig. 4 und/oder gemäß Fig. 5 angeordnet sein.

Das Diagramm 70 zeigt insbesondere die durchschnittliche Helligkeit des Zeigers 30 bzw. der Zeigerspitze 52 an. Das Diagramm 70 weist insbesondere eine X-Achse 72 auf, wobei mittels der X-Achse eine Position des Zeigers 30 angezeigt wird. Die Position des Zeigers kann beispielsweise mittels eines Winkels des Zeigers 30 angezeigt werden. In dieser vorteilhaften Ausführung wird die Position des Zeigers 30 mittels der Drehzahl eines Fahrzeugs, insbesondere in Umdrehungen pro Minute, angezeigt wird. Mit anderen Worten zeigt die Stellung des Zeigers insbesondere die Drehzahl eines Fahrzeugs an. Somit wird auf der X-Achse insbesondere die Position des Zeigers 30 in Bezug zu der Skalierung der Anzeigevorrichtung 22 angezeigt. In einer weiteren Ausführung kann die Position des Zeigers auch mittels einer Geschwindigkeit eines Fahrzeugs, einer Temperatur, eines Motors eines Fahrzeugs oder eines Tanks eines Fahrzeugs angezeigt werden. Weiterhin weist das Diagramm 70 eine Y-Achse 74 auf, wobei mittels der Y-Achse die durchschnittliche Helligkeit des Zeigers 30 bzw. der Zeigerspitze 52 angezeigt wird.

Das Diagramm 70 weist eine erste Kurve 76 sowie eine zweite Kurve 78 auf. Die erste Kurve 76 insbesondere eine Verteilung der durchschnittlichen Helligkeit des Zeigers 30 bei einer Lichtquelle an. Die zweite Kurve 78 insbesondere eine Verteilung der durchschnittlichen Helligkeit des Zeigers 30 bei zwei Lichtquellen an. Die erste Kurve 76 weist insbesondere ein Maximum auf, wobei das Maximum der ersten Kurve 76 insbesondere bei einer Position des Zeigers 30 bei einer Drehzahl von einem Wert von ungefähr 2000 Drehungen pro Minute ausgebildet ist. Die zweite Kurve 78 weist insbesondere zwei Maxima auf, wobei das erste Maxima bei einer Position des Zeigers 30 bei einer niedrigeren Drehzahl von einem Wert von 2000 Umdrehungen/min ausgebildet ist sowie das zweite Maxima bei einer Position des Zeigers 30 bei einer höheren Drehzahl von einem Wert von 2000 Umdrehungen/min ausgebildet ist.

Fig. 7 ein Diagramm 70 einer Helligkeit eines Zeigers 30 gemäß eines Ausführungsbeispiels der vorliegenden Erfindung. Das Diagramm 70 kann insbesondere entsprechend des Diagramms 70 gemäß Fig. 6 ausgebildet sein. Im Unterschied zu dem Diagramm 70 gemäß Fig. 6 wird in dem Diagramm 70 gemäß Fig. 7 lediglich die erste Kurve 76 sowie die Korrektur der Helligkeit der ersten Kurve 76 dargestellt.

Nach der Korrektur der Helligkeit wird aus der ersten Kurve 76 insbesondere eine dritte Kurve 79, wobei die dritte Kurve 79 insbesondere zumindest annähernd parallel zu der X-Achse 72 verläuft. In anderen Worten bildet die dritte Kurve 79 insbesondere eine zumindest annähernd konstante durchschnittliche Helligkeit des Zeigers 30.

Zur Korrektur der Helligkeit der ersten Kurve 76 wird beispielsweise ein erster Helligkeitswert 80 auf der ersten Kurve 76 ausgewählt, wobei der erste Helligkeitswert 80 insbesondere in der Art korrigiert wird, dass der erste Helligkeitswert 80 mit einem Wert von zum Beispiel etwa 1,1 multipliziert wird. Hierdurch wird der erste Helligkeitswert 80 insbesondere um einen entsprechenden ersten Faktor entsprechend des dritten Pfeils 81 in Richtung der Y-Achse 74 in der Art verschoben, dass sich der veränderte bzw. korrigierte, erste Helligkeitswert 80' nun auf der dritten Kurve 79 befindet. Da sich der erste Helligkeitswert 80 auf der ersten Kurve 76, insbesondere in Bezug zu der Y-Achse 74, unterhalb der dritten Kurve 79 befindet, wird der erste Helligkeitswert 80 entsprechend nach oben korrigiert. Mit anderen Worten wird der erste Helligkeitswert 80 um den ersten Faktor entsprechend des dritten Pfeils 81 erhöht bzw. nach oben verschoben. Der korrigierte, erste Helligkeitswert 80' ist somit größer als der unkorrigierte, erste Helligkeitswert 80.

Weiterhin wird ein zweiter Helligkeitswert 82 auf der ersten Kurve 76 ausgewählt, wobei der zweite Helligkeitswert 82 insbesondere in der Art korrigiert wird, dass der zweite Helligkeitswert 82 mit einem Wert von zum Beispiel etwa 0,9 multipliziert wird. Hierdurch wird der zweite Helligkeitswert 82 insbesondere um einen entsprechenden zweiten Faktor entsprechend des vierten Pfeils 83 in Richtung der Y-Achse 74 in der Art verschoben, dass sich der veränderte bzw. korrigierte, zweite Helligkeitswert 82' nun auf der dritten Kurve 79 befindet. Da sich der zweite Helligkeitswert 82 auf der ersten Kurve 76, insbesondere in Bezug zu der Y-Achse 74, oberhalb der dritten Kurve 79 befindet, wird der zweite Helligkeitswert 82 entsprechend nach unten korrigiert und somit entsprechend in die entgegengesetzte Richtung zu dem ersten Pfeil 81. Mit anderen Worten wird der zweite Helligkeitswert 82 um den zweiten Faktor entsprechend des vierten Pfeils 83 verringert bzw. nach unten verschoben. Der korrigierte, zweite Helligkeitswert 82' ist somit kleiner als der unkorrigierte, zweite Helligkeitswert 82.

Weiterhin wird ein dritter Helligkeitswert 84 auf der ersten Kurve 76 ausgewählt, wobei der dritter Helligkeitswert 84 insbesondere in der Art korrigiert wird, dass der dritte Helligkeitswert 84 mit einem Wert von zum Beispiel etwa 0,6 multipliziert wird. Hierdurch wird der dritter Helligkeitswert 84 insbesondere um einen entsprechenden dritten Faktor entsprechend des fünften Pfeils 85 in Richtung der Y-Achse in der Art verschoben, dass sich der veränderte bzw. korrigierte, dritte Helligkeitswert 84' nun auf der dritten Kurve 79 befindet. Da sich der dritter Helligkeitswert 84 auf der ersten Kurve 76, insbesondere in Bezug zu der Y-Achse 74, oberhalb der dritten Kurve 79 befindet, wird der dritte Helligkeitswert 84 entsprechend nach unten korrigiert und somit entsprechend in die entgegengesetzte Richtung zu dem ersten Pfeil 81. Mit anderen Worten wird der dritte Helligkeitswert 84 um den dritten Faktor entsprechend des fünften Pfeils 85 verringert bzw. nach unten verschoben. Da der dritte Helligkeitswert 84 insbesondere einen höheren Wert darstellt in Bezug zu dem zweiten Helligkeitswert 82, wird der dritte Helligkeitswert 84 mit einem entsprechenden größeren dritten Faktor korrigiert in Bezug zu dem zweiten Faktor des zweiten Helligkeitswert 82. Der korrigierte, dritte Helligkeitswert 84' ist kleiner als der unkorrigierte, dritte Helligkeitswert 84.

Entsprechend dem dritten Helligkeitswert 84 wird der vierte Helligkeitswert 86 mit einem Wert von zum Beispiel etwa 0,5 multipliziert und somit um einen vierten Faktor entsprechend des sechsten Pfeils 87 auf einen korrigierten, vierten Helligkeitswert 86' verschoben.
Entsprechend dem dritten Helligkeitswert 84 wird der fünfte Helligkeitswert 88 mit einem Wert von zum Beispiel etwa 0,6 multipliziert und somit um einen fünften Faktor entsprechend des siebten Pfeils 89 auf einen korrigierten, fünften Helligkeitswert 88' verschoben.
Entsprechend dem zweiten Helligkeitswert 82 wird der sechste Helligkeitswert 90 mit einem Wert von zum Beispiel etwa 0,9 multipliziert und somit um einen sechsten Faktor entsprechend des achten Pfeils 91 auf einen korrigierten, sechsten Helligkeitswert 90' verschoben.
Entsprechend dem ersten Helligkeitswert 80 wird der siebte Helligkeitswert 92 mit einem Wert von zum Beispiel etwa 1,2 multipliziert und somit um einen siebten Faktor entsprechend des neunten Pfeils 93 auf einen korrigierten, siebten Helligkeitswert 92' verschoben. Die Multiplikationswerte wurde als Beispiele gewählt und können auch unterschiedliche Werte annehmen.

Für jeden Zeiger wird die Helligkeit je nach Zeigerposition mittels einer Kennlinie, insbesondere einer Dimmkennlinie, über eine entsprechende Software korrigiert. Dafür können zum Beispiel Stützstellen, insbesondere Helligkeitswerte, definiert werden an denen die Helligkeit über Faktoren erhöht oder verringert wird. Zwischen den Stützstellen bzw. Helligkeitswerten kann zum Beispiel linear interpoliert werden. In diesem Beispiel werden 7 Stützstellen mit Faktoren von 0,5 bis 1,2 ausgebildet. Hierdurch kann die erste Kurve 76 der Helligkeit der Lichtquelle insbesondere mittels einer Kennlinie, welche insbesondere mit entsprechenden Faktoren ausgebildet ist, korrigiert werden. Mittels einem anderem Vorwiderstand vor der Lichtquelle und/oder einer anderen Lichtquelle kann die Kurve nach oben oder unten verschoben werden.

In einem Kombiinstrument bzw. in einem Instrument Cluster eines Fahrzeugs können insbesondere eine Mehrzahl an Anzeigevorrichtung angeordnet werden. Jede der Anzeigevorrichtung kann insbesondere einen eigenen Zeiger umfassen. Für jeden Zeiger im Kombiinstrument kann insbesondere ein eigener Dimmkanal mit einer entsprechenden Kennlinie eingerichtet werden. Hierdurch können die Helligkeiten der einzelnen Zeiger unabhängig voneinander gedimmt werden.

Für die Beleuchtung wird für jeden Zeiger eine Vermessung durchgeführt. Nach der Vermessung des ersten Beleuchtungsmusters ergibt sich die Helligkeit des Zeigers in Abhängigkeit des Drehwinkels wie beispielshaft im Diagramm mittels der ersten Kurve 76 dargestellt. Hierbei ist die Helligkeit insbesondere abhängig von der Position des Zeigers insbesondere von dem Drehwinkel des Zeigers.

In der Anzeigevorrichtung ist insbesondere die Position des Zeigers bekannt. Hierdurch kann mittels der mittels der Kennlinie hinterlegten Faktoren sowie den separaten Dimmkanälen die Helligkeit eines Zeigers bzw. mehrerer Zeiger individuell und/oder fortlaufend angepasst bzw. korrigiert werden. Da die Helligkeit einer Lichtquelle über eine Software von beispielsweise 0% bis 100% der verfügbaren Helligkeit geregelt werden kann, müssen kaum mechanische Änderungen der Einzelteile vorgenommen werden. Dadurch kann sich insbesondere ein verkürzter Entwicklungsprozess ergeben.

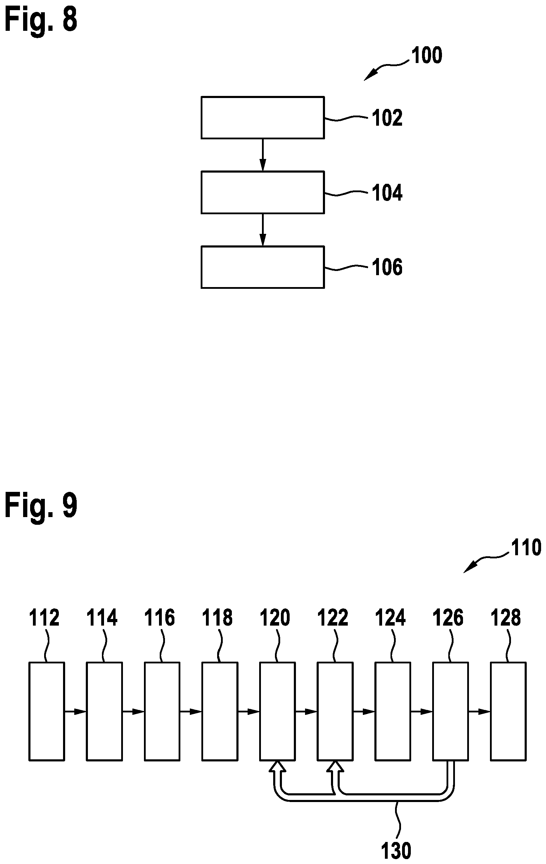

Fig. 8 ein Verfahren 100 zum Ansteuern einer Anzeigevorrichtung gemäß eines Ausführungsbeispiels der vorliegenden Erfindung. Die Anzeigevorrichtung kann insbesondere gemäß der Anzeigevorrichtung gemäß Fig. 1 und/oder gemäß Fig. 2 und/oder gemäß Fig. 3 und/oder gemäß Fig. 4 und/oder gemäß Fig. 5 ausgebildet sein und/oder gemäß Fig. 1 und/oder gemäß Fig. 2 in dem Fahrzeug 20 angeordnet sein.

In einem ersten Schritt 102 des Verfahrens 100 wird eine Position des Zeigers der Anzeigevorrichtung identifiziert.

In einem zweiten Schritt 104 des Verfahrens 100 wird eine Helligkeit von Lichtstrahlen definiert, welche von der Beleuchtungsvorrichtung der Anzeigevorrichtung ausgesendeten bzw. ausgestrahlt werden sollen. Die Definition der Helligkeit der Lichtstrahlen kann insbesondere mittels einer Kennlinie erfolgen. Beispielsweise kann hierfür ein Diagramm, beispielsweise ein Diagramm gemäß Fig. 7 verwendet werden. Die Helligkeit der Lichtstrahlen ausgesendet von der Beleuchtungsvorrichtung wird in Abhängigkeit von einer Drehposition des Zeigers derart geregelt, dass der Zeiger unabhängig von der Drehposition des Zeigers mit einer vorgegebenen Helligkeit ausgeleuchtet wird.

In einem dritten Schritt 106 des Verfahrens 100 werden von der Beleuchtungsvorrichtung Lichtstrahlen mit einer definierten bzw. bestimmten Helligkeit ausgesendet, wobei mittels der Lichtstrahlen der Zeiger einer Anzeigevorrichtung beleuchtet wird.

Fig. 9 zeigt ein Verfahren 110 zur Herstellung einer Anzeigevorrichtung gemäß eines Ausführungsbeispiels der vorliegenden Erfindung. Die Anzeigevorrichtung kann insbesondere gemäß der Anzeigevorrichtung gemäß Fig. 1 und/oder gemäß Fig. 2 und/oder gemäß Fig. 3 und/oder gemäß Fig. 4 und/oder gemäß Fig. 5 ausgebildet sein und/oder gemäß Fig. 1 und/oder gemäß Fig. 2 in dem Fahrzeug 20 angeordnet sein.

In einem ersten Schritt 112 des Verfahrens 110 wird ein Beleuchtungskonzept erstellt sowie das Beleuchtungskonzept abgesichert, beispielsweise mittels Simulation, Prototypen, Skizzen oder weiteren Methoden. Mit anderen Worten wird bei Projektstart bzw. bei einem Start des Verfahrens 110 in dem ersten Schritt 112 ein Beleuchtungskonzept erstellt und validiert. In dieses Beleuchtungskonzept können fließen beispielsweise Simulationen, Prototypen, Skizzen und/oder Erfahrungen einfließen.
In einem zweiten Schritt 114 des Verfahrens 110 werden die Einzelteile der Anzeigevorrichtung konstruiert. Mit anderen Worten werden basierend auf dem Beleuchtungskonzept die Einzelteile konstruiert.
In einem dritten Schritt 116 des Verfahrens 110 werden Werkzeuge zur Herstellung der Komponenten der Anzeigevorrichtung erstellt bzw. verändert.
In einem vierten Schritt 118 des Verfahrens 110 wird das Beleuchtungsmuster bzw. das Muster der Beleuchtung der Anzeigevorrichtung aufgebaut und vermessen. Mit anderen Worten wird die Beleuchtungsvorrichtung der Anzeigevorrichtung angesteuert, wobei die Helligkeit gemessen wird. Beispielsweise kann hierdurch ein Diagramm gemäß Fig. 6 ermittelt werden. Beleuchtungsmuster können insbesondere erst aufgebaut werden, nachdem die Werkzeuge erstellt und erste Teile vorhanden sind. Mit anderen Worten wird an den Mustern die Beleuchtung, beispielsweise die Helligkeit der Zeiger in Abhängigkeit vom Drehwinkel, gemessen.
In einem fünften Schritt 120 des Verfahrens 110 wird die Leuchtquelle bzw. die Lichtquelle angepasst. Weiterhin kann ein Widerstand vor der Lichtquelle angeordnet werden. Mit anderen Worten kann mittels Änderungen an den LEDs und/oder den Vorwiderständen die Beleuchtung optimiert werden. Insbesondere kann es vorkommen, dass ohne die Verwendung einer Kennlinie bzw. einer Dimmkennlinie die Einzelteile geändert werden. Mögliche Änderungen sind z.B. Bedruckung, Folien, Rauheiten, geometrische Änderungen oder Konzeptänderungen.
In einem sechsten Schritt 122 des Verfahrens 110 wird die Beleuchtung bzw. die Helligkeit der Lichtstrahlen der Beleuchtungsvorrichtung mittels einer Kennlinie korrigiert. Die Korrektur kann entsprechend des Diagramms gemäß Fig. 7 durchgeführt werden.
In einem siebten Schritt 124 des Verfahrens 110 werden die Beleuchtungsmuster erneut aufgebaut und erneut vermessen, wobei die Ansteuerung der Beleuchtungsvorrichtung während dieser Vermessung mittels der Kennlinie korrigiert werden. Mit anderen Worten werden mit den optimierten Bauteilen Beleuchtungsmuster aufgebaut und vermessen.
In einem achten Schritt 126 des Verfahrens 110 wird entschieden, ob die Helligkeit und/oder die Homogenität der Helligkeit über die Position des Zeigers und somit über den Drehwinkel des Zeigers den Anforderungen entspricht.
Sind die Anforderungen erfüllt so wird in einem neunten Schritt 128 des Verfahrens 110 die Anzeigevorrichtung bzw. das Konzept der Anzeigevorrichtung freigegeben. Sind die Anforderungen nicht erfüllt, so wird entsprechend des Pfeils 130 das Verfahren 110 entweder von dem fünften Schritt 120 oder von dem sechsten Schritt 122 erneut durchgeführt. Kann keine Korrektur der Beleuchtung mittels einer Kennlinie erfolgen, so müsste das Verfahren, insbesondere wenn die Anforderungen nicht erfüllt sind, gegebenenfalls von dem ersten Schritt 112 oder von dem zweiten Schritt 114 an erneut gestartet werden.

## Patentansprüche

1. Anzeigevorrichtung (22), insbesondere für ein Fahrzeug (20),
wobei die Anzeigevorrichtung (22) wenigstens einen drehbar ausgebildeten Zeiger (30) aufweist,
wobei die Anzeigevorrichtung (22) eine Beleuchtungsvorrichtung (34) aufweist,
wobei der Zeiger (30) mittels Lichtstrahlen ausgesendet von der Beleuchtungsvorrichtung (34) beleuchtbar ist,
wobei die Helligkeit der Lichtstrahlen ausgesendet von der Beleuchtungsvorrichtung (34) in Abhängigkeit von einer Drehposition des Zeigers (30) derart regelbar ist, dass der Zeiger (30) unabhängig von der Drehposition des Zeigers (30) mit einer vorgegebenen Helligkeit ausleuchtbar ist.

2. Anzeigevorrichtung (22) nach Anspruch 1, **dadurch gekennzeichnet, dass** der Zeiger (30) einen Lichtleiter (36) aufweist.

3. Anzeigevorrichtung (22) nach einem der vorherigen Ansprüche, **dadurch gekennzeichnet, dass** der Zeiger (30) auf einer Welle angeordnet ist, wobei die Welle senkrecht zu einem Träger (40) angeordnet ist, wobei die Beleuchtungsvorrichtung (34) an dem Träger (40) angeordnet ist.

4. Anzeigevorrichtung (22) nach Anspruch 3, **dadurch gekennzeichnet, dass** der Träger (40) ein Element (42) mit einer Skalierung (58) aufweist, wobei der Zeiger (30) in Abhängigkeit der Drehposition des Zeigers (30) mittels der Skalierung (58) einen bestimmten Wert anzeigt.

5. Anzeigevorrichtung (22) nach einem der vorherigen Ansprüche, **dadurch gekennzeichnet, dass** der Zeiger (30) eine Lichteinkoppelfläche (46) aufweist, wobei die Lichteinkoppelfläche (46) derart angeordnet ist, dass die Lichtstrahlen ausgesendet von der Beleuchtungsvorrichtung (34) in der Lichteinkoppelfläche (46) einkoppelbar sind.

6. Anzeigevorrichtung (22) nach einem der vorherigen Ansprüche, **dadurch gekennzeichnet, dass** die Helligkeit der Lichtstrahlen ausgesendet von der Beleuchtungsvorrichtung (34) mittels einer Kennlinie regelbar ist.

7. Anzeigevorrichtung (22) nach einem der vorherigen Ansprüche, **dadurch gekennzeichnet, dass** die Anzeigevorrichtung (22) einen Sensor zum Bestimmen einer Drehposition des Zeigers (30) aufweist.

8. Anzeigevorrichtung (22) nach einem der vorherigen Ansprüche, **dadurch gekennzeichnet, dass** die Beleuchtungsvorrichtung (34) zumindest eine Lichtquelle (56, 64, 66) aufweist.

9. Anzeigevorrichtung (22) nach Anspruch 8, **dadurch gekennzeichnet, dass** die zumindest eine Lichtquelle (56, 64, 66) als eine Leuchtdiode oder als eine LED oder als eine OLED ausgebildet ist.

10. Anzeigevorrichtung (22) nach einem der vorherigen Ansprüche, **dadurch gekennzeichnet**,
wobei der Zeiger (30) mittels Lichtstrahlen ausgesendet von der Beleuchtungsvorrichtung (34) beleuchtet ist,
wobei die Helligkeit der Lichtstrahlen ausgesendet von der Beleuchtungsvorrichtung (34) in Abhängigkeit von einer Drehposition des Zeigers (30) derart geregelt wird, dass der Zeiger (30) unabhängig von der Drehposition des Zeigers (30) mit einer vorgegebenen Helligkeit ausgeleuchtet ist.

11. Instrument Cluster mit einer Anzeigevorrichtung (22) nach einem der vorherigen Ansprüche.

12. Fahrzeug (20) mit einen Instrument Cluster nach Anspruch 11.

13. Verfahren zum Ansteuern einer Anzeigevorrichtung (22) nach einem der vorherigen Ansprüche 1 bis 10,
wobei der Zeiger (30) mittels Lichtstrahlen ausgesendet von der Beleuchtungsvorrichtung (34) beleuchtet wird,
wobei die Helligkeit der Lichtstrahlen ausgesendet von der Beleuchtungsvorrichtung (34) in Abhängigkeit von einer Drehposition des Zeigers (30) derart geregelt wird,
dass der Zeiger (30) unabhängig von der Drehposition des Zeigers (30) mit einer vorgegebenen Helligkeit ausgeleuchtet wird.

14. Computerprogramm, das dazu eingerichtet ist, das Verfahren nach Anspruch 13 auszuführen.

15. Computerlesbares Speichermedium, dass das Computerprogramm nach Anspruch 14 umfasst.
